# EUROPÄISCHE PATENTSCHRIFT

(11) **EP 3 246 132 B1**
(45) Veröffentlichungstag und Bekanntmachung des Hinweises auf die Patenterteilung: **26.09.2018**
(21) Anmeldenummer: 17167913.7
(22) Anmeldetag: 25.04.2017
(51) Int. Cl.: B25F 5/02, B23D 47/02, B27B 27/00, B26D 1/16, B26D 7/02, B25H 1/00, B23Q 3/00

(54) **WERKZEUGMASCHINE MIT EINEM STÜTZTEIL**
MACHINE TOOL WITH A SUPPORT PIECE
MACHINE-OUTIL DOTÉE D'UNE PARTIE DE SUPPORT

(30) Priorität: 20.05.2016 DE 102016109376
(43) Veröffentlichungstag der Anmeldung: 22.11.2017
(73) Patentinhaber: Festool GmbH, 73240 Wendlingen am Neckar (DE)
(72) Erfinder: WERBACH, Martin, 89264 Oberhausen (DE); Höfer, Tobias, 73660 Urbach (DE)
(74) Vertreter: Patentanwälte Bregenzer und Reule Partnerschaftsgesellschaft mbB

(56) Entgegenhaltungen:
- WO-A2-2005/102626
- DE-U1-202006 001 591
- DE-U1-202006 009 307
- DE-U1-202011 050 892
- US-A1- 2006 272 744
- US-A1- 2010 018 372
- US-A1- 2011 011 229

## Beschreibung

Die Erfindung betrifft eine Werkzeugmaschine, insbesondere eine mobile Werkzeugmaschine oder Hand-Werkzeugmaschine, gemäß dem Oberbegriff des Anspruchs 1.

Eine derartige Werkzeugmaschine ist beispielsweise in DE 102 27 984 B1 erläutert. Mit der Stelleinrichtung ist es möglich, das Fixierelement in Fixiereingriff mit beiden Führungselementen zu bringen. Die Anordnung muss symmetrisch ausgestaltet sein. Die Bedienung ist dadurch an sich komfortabel. Allerdings ist die Stelleinrichtung zwischen den Führungselementen angeordnet, damit das Fixierelement simultan beide Führungselemente klemmen kann. Die Anordnung der Stelleinrichtung zwischen den Führungselementen ist jedoch nicht bei jeder Werkzeugmaschine realisierbar.

Eine Werkzeugmaschine gemäß dem Oberbegriff des Anspruchs 1 ist in der DE 20 2011 050892 U1 beschrieben.

Es ist daher die Aufgabe der vorliegenden Erfindung, eine Werkzeugmaschine mit einer verbesserten Fixiereinrichtung vorzuschlagen.

Zur Lösung der Aufgabe ist eine Werkzeugmaschine gemäß der technischen Lehre des Anspruchs 1 vorgesehen.

Bei einer Werkzeugmaschine der eingangs genannten Art kann also vorteilhaft vorgesehen sein, dass das Fixierelement an einem Lagerabschnitt des ersten Führungselements schwenkbar gelagert ist und durch die Stelleinrichtung zwischen einer Fixier-Schwenkstellung, bei der das zweite Führungselement gegenüber der zweiten Lageraufnahmeanordnung bezüglich der Längsachse fixiert ist, und einer Löse-Schwenkstellung verstellbar ist, bei der das zweite Führungselement gegenüber der zweiten Lageraufnahmeanordnung verschieblich ist. Es ist aber auch möglich, dass nur eines der Führungselemente gegenüber einer Verschiebung entlang der Längsachse fixierbar ist, dass andere Führungselement jedoch nicht.

Bevorzugt ist, wenn beide Führungselemente bezüglich der Längsachse in der Fixier-Schwenkstellung fixiert sind. Es kann auch vorteilhaft vorgesehen sein, dass nur eines der Führungselemente bezüglich einer Verschiebung parallel zur Längsachse durch das Fixierelement in der Fixier-Schwenkstellung fixiert ist, das andere Führungselement zumindest ein geringeres Bewegungsspiel bezüglich einer Verschieblichkeit in Richtung der Längsachse aufweist.

Es ist dabei ein Grundgedanke, dass das erste Führungselement, beispielsweise ein Führungsstab oder eine Führungsstange, ein Schwenklager für das Fixierelement bereitstellt, sodass dieses in der Art eines Klemmhebels oder Fixierhebels zu dem anderen Führungselement, dem zweiten Führungselement hin und von diesem Führungselement weg schwenken kann, um das erste Führungselement und/oder das zweite Führungselement bezüglich der Längsachse zu fixieren. Somit hat mindestens eines der Führungselemente sozusagen eine Lagerfunktion, in dem es nämlich einen Lagerabschnitt für das Fixierelement bereitstellt, an welchem das Fixierelement schwenkbar gelagert ist.

Das Fixierelement ist zweckmäßigerweise in der Art eines Bügels oder Schwenkbügels ausgestaltet oder wird dadurch gebildet.

Das Fixierelement kann beispielsweise durch seine Gewichtskraft und/oder durch eine Federanordnung in Richtung der Löse-Schwenkstellung und/oder in die Fixier-Schwenkstellung belastet sein.

Die Stelleinrichtung weist zweckmäßigerweise eine Bedienhandhabe zum manuellen Ergreifen und/oder Betätigen durch einen Bediener auf, beispielsweise einen Bedienknauf, einen Bedienhebel oder dergleichen. Bevorzugt ist eine werkzeuglose Betätigung der Stelleinrichtung, wobei prinzipiell aber auch eine Betätigung der Stelleinrichtung anhand eines Bedienwerkzeugs, beispielsweise eines Handgriffs, der von der Stelleinrichtung lösbar ist, möglich ist.

Die Stelleinrichtung kann unidirektional nur zum manuellen Verstellen des Fixierelements in eine Richtung, also in Richtung der Löse-Schwenkstellung oder der Fixier-Schwenkstellung vorgesehen sein. Es ist auch möglich, dass die Stelleinrichtung mit dem Fixierelement bidirektional bewegungsgekoppelt ist, so dass die Stelleinrichtung zum Verstellen von der Löse-Schwenkstellung in die Fixier-Schwenkstellung und umgekehrt vorgesehen ist.

Die Stelleinrichtung weist zweckmäßigerweise ein linear verstellbares Stellglied auf, zum Beispiel ein Schraubglied oder dergleichen. Das Stellglied wirkt auf das Fixierelement ein und lenkt dieses zwischen den Schwenkstellungen aus. Eine Stellachse dieses Stellglieds verläuft zweckmäßigerweise quer zu einer Längsrichtung des Fixierelements.

Es ist aber auch möglich, dass die Stelleinrichtung beispielsweise eine exzentrische Betätigungskontur, einen Nocken oder dergleichen aufweist. Mithin ist es also auch möglich, dass die Stelleinrichtung ein um eine Drehachse betätigbares Stellglied aufweist, wobei diese Drehachse parallel oder mit flachen Winkel schräg geneigt zu der Längsachse verläuft, entlang derer das Stützteil bezüglich der Maschinenbasis verschieblich ist.

Das Werkzeug kann beispielsweise ein Trennwerkzeug, Fräswerkzeug oder Bohrwerkzeug sein. Das Trennwerkzeug ist vorzugsweise ein Sägeblatt oder umfasst ein Sägeblatt. Das Trennwerkzeug kann aber auch eine Trennscheibe umfassen oder sein.

Die Werkzeugmaschine ist zweckmäßigerweise eine mobile, jedoch stationär einsetzbare Werkzeugmaschine. Insbesondere ist es vorteilhaft, wenn die Werkzeugmaschine zwar transportierbar ist, d.h. ein Gewicht von weniger als 60-80 kg aufweist, für einen Sägebetrieb aber auf einem Untergrund abgestellt werden kann. Das Werkstück wird zweckmäßigerweise bezüglich der Werkzeugmaschine ortsfest gehalten, während der Trennschnitt oder Sägeschnitt oder eine sonstige Werkstückbearbeitung, beispielsweise eine Bohrung oder Fräsarbeit, durchgeführt wird.

Eine bevorzugte Ausführungsform der Erfindung sieht vor, dass die Werkzeugmaschine eine Tischkreissäge, eine Kappsäge, eine Zugsäge oder eine Kapp-Zug-Säge ist. Insbesondere ist es vorteilhaft, wenn die Werkzeugmaschine eine Sägemaschine für einen halbstationären Betrieb ist, d.h. dass sie beispielsweise auf Baustellen mitgenommen und dort betrieben werden kann.

Vorteilhaft ist die Maschinenbasis zum Abstellen auf einem Untergrund ausgestaltet oder vorgesehen.

Die Erfindung eignet sich prinzipiell aber auch für Werkzeugmaschinen, die beispielsweise am Werkstück entlang bewegt werden.

Vorteilhaft ist vorgesehen, dass die Maschinenbasis eine Schwenkbasis aufweist, an der ein Schwenkteil um eine Schwenkachse zur Veränderung einer Relativposition der Werkzeugaufnahme für das Werkzeug, zum Beispiel ein Trennwerkzeug, und eine zum Anlegen eines Werkstücks vorgesehenen Anlagefläche schwenkbar gelagert ist. An die Anlagefläche kann das Werkstück beispielsweise seitlich oder mit seiner Unterseite angelegt werden.

Insbesondere ist es vorteilhaft, wenn das Schwenkteil und/oder die Schwenkbasis eine Auflagefläche oder Anlagefläche für das Werkstück bereitstellt. Das Schwenkteil oder die Schwenkbasis oder beide können auch eine Tragbasis für die Antriebsbaugruppe bereitstellen. Beispielweise ist die Antriebsbaugruppe an einem Träger, der vor die Auflagefläche oder Anlagefläche beim Gebrauch der Werkzeugmaschine nach oben vorsteht, angeordnet oder gehalten.

Der Antriebsmotor ist zweckmäßigerweise ein elektrischer Antriebsmotor.

Der Antriebsmotor ist vorteilhaft zu einem Drehantreiben der Werkzeugaufnahme und somit des Trennwerkzeugs vorgesehen. Es ist auch möglich, dass ein Getriebe zwischen Antriebsmotor und Werkzeugaufnahme vorgesehen ist, beispielsweise zu einer Drehzahlveränderung und/oder in Gestalt eines Winkelgetriebes und/oder zur Erzeugung einer oszillierenden Bewegung des Trennwerkzeugs.

Eine asymmetrische Anordnung der Stelleinrichtung ist bezüglich des Fixierelements oder der Führungselemente ohne weiteres realisierbar. Beispielsweise ist die Stelleinrichtung in einem kleineren Abstand zu dem ersten Führungselement als zu dem zweiten Führungselement angeordnet oder hat einen Wirkungsbereich, der zum ersten Führungselement einen kleineren Abstand hat als zum zweiten Führungselement. Möglich ist aber auch die umgekehrte Konfiguration, bei der vorgesehen ist, dass die Stelleinrichtung in einem größeren Abstand zu dem ersten Führungselement als zu dem zweiten Führungselement auf das Fixierelement einwirkt und oder in dem größeren Abstand angeordnet ist.

Bei beiden Anordnungen ist es möglich, dass die Stelleinrichtung zwischen den beiden Führungselementen angeordnet ist. Bevorzugt ist jedoch, dass die Stelleinrichtung außerhalb eines Zwischenraums zwischen den Führungselementen angeordnet ist und/oder auf das Fixierelement einwirkt. Somit ist beispielsweise ein Kraftarm des Fixierelements außerhalb des Zwischenraums zwischen den Führungselementen vorgesehen. Auf diesen Kraftarm wirkt die Stelleinrichtung ein.

Es ist auch möglich, dass die Stelleinrichtung eine manuell betätigbare Betätigungshandhabe aufweist, die über eine Kraftumlenkung, beispielsweise ein Hebelgetriebe, Zahngetriebe oder dergleichen, ein von der Betätigungshandhabe, beispielsweise einem Drehknauf oder dergleichen, entferntes Stellglied betätigt, wobei dieses Stellglied seinerseits wiederum auf das Fixierglied einwirkt. Somit ist es möglich, dass die Betätigungshandhabe sozusagen abseits des Wirkungsbereichs angeordnet ist, in welchem die Stelleinrichtung auf das Fixierelement einwirkt. So ist beispielsweise eine Kraftumlenkung möglich, bei der die Betätigungshandhabe außerhalb eines Zwischenraums zwischen den Führungselementen angeordnet ist, der Wirkungsbereich der Stelleinrichtung auf das Fixierelement jedoch zwischen den Führungselementen vorgesehen ist.

Es kann vorgesehen sein, dass das Führungselement, welches näher in einem Einwirkungsbereich der Stelleinrichtung auf das Fixierelement angeordnet ist, mit einer größeren Kraft gegenüber einer Verschiebung bezüglich der Längsachse durch das Fixierelement gehalten ist als das von dem Einwirkungsbereich entferntere Führungselement. So kann beispielsweise das erste Führungselement, an welchem das Fixierelement drehbar gelagert ist, stärker gegen eine Verschiebung bezüglich der Längsachse fixiert sein als das zweite Führungselement. Es ist sogar möglich, dass das zweite Führungselement nicht oder wenig gegen eine Verschieblichkeit bezüglich der Längsachse fixiert, beispielsweise geklemmt oder verriegelt ist, dass jedoch ein Bewegungsspiel des zweiten Führungselements bezüglich der zweiten Lageraufnahmeanordnungen durch das Fixierelement reduziert wird.

Ein bevorzugtes Konzept sieht vor, dass das Fixierelement mindestens eine Lageraufnahme aufweist, die vom ersten Führungselement oder zweiten Führungselement durchdrungen ist. Es ist also möglich, dass nur für eines der Führungselemente eine Lageraufnahme vorgesehen ist oder für beide Führungselemente jeweils mindestens eine Lageraufnahme. Somit ist es beispielsweise möglich, dass das Fixierelement an den Führungselementen sozusagen aufgehängt ist, wenn beispielsweise für beide Führungselemente jeweils mindestens eine Lageraufnahme vorgesehen ist, die das jeweilige Führungselement in einem Umfangsbereich von mehr als 180° umgreift.

Zweckmäßigerweise ist vorgesehen, dass eine Lageraufnahme des Fixierelements, in der das zweite Führungselement aufgenommen ist, ein Bewegungsspiel des Fixierelements quer zu der Längsachse ermöglicht. Das Bewegungsspiel ist zweckmäßigerweise entlang einer Bewegungsachse, die zwischen den Führungselementen verläuft, vorgesehen. Für das Bewegungsspiel kann die Lageraufnahme beispielsweise als ein Langloch ausgestaltet sein oder ein Langloch aufweisen. Die mindestens eine dem zweiten Führungselement zugeordnete Lageraufnahme kann somit beispielsweise für einen Toleranzausgleich bei der Montage etwas größer ausgestaltet sein als eine Lageraufnahme für das erste Führungselement, die eine Schwenklager-Funktion erfüllt.

Bei dem Fixierelement ist es vorteilhaft, wenn es quer zu der Längsachse, entlang derer das mindestens eine Stützteil relativ zur Maschinenbasis beweglich gelagert ist, verdrehgesichert an dem ersten Führungselement gelagert ist, jedoch um eine zu der Längsachse parallele Schwenkachse, nämlich die Längsachse des Führungselements, schwenkbar ist.

An dieser Stelle sei erwähnt, dass das Fixierelement für ein jeweiliges Führungselement nur eine einzige Lageraufnahme aufweisen kann. Es ist aber vorteilhaft, wenn das Führungselement mindestens zwei in einem Abstand bezüglich der Längsachse angeordnete Lageraufnahmen, also beispielsweise Lageraufnahme-Paare, durchdringt.

Vorteilhaft ist vorgesehen, dass die erste Lageraufnahmeanordnung und/oder die zweite Lageraufnahmeanordnung ein Paar von Lageraufnahmen aufweist, zwischen denen das Führungselement angeordnet ist. Somit ist also das erste Führungselement und oder das zweite Führungselement jeweils an zwei im Abstand zueinander angeordneten Lageraufnahmen geführt. Vorteilhaft ist zwischen diesen das jeweilige Führungselement führenden Lageraufnahmen das Fixierelement vorgesehen.

Bevorzugt ist es, wenn die Fixiereinrichtung zur Verklemmung des ersten Führungselements und/oder zweiten Führungselements relativ zu der ersten oder zweiten Lageraufnahmeanordnung ausgestaltet ist. Zweckmäßigerweise ist vorgesehen, dass das Fixierelement in der Fixier-Schwenkstellung in einem Klemmsitz an dem ersten Führungselement und/oder dem zweiten Führungselement anliegt. Dabei kann wie schon erwähnt der Klemmsitz bei einem der Führungselemente mit stärkerer Klemmkraft realisiert sein als beim anderen Führungselement. Insbesondere ist es vorteilhaft wenn beispielsweise dasjenige Führungselement, welches das Schwenklager für das Fixierelement bereitstellt, mit starker Klemmkraft gegenüber einer Längsverschiebung entlang der Längsachse oder parallel zur Längsachse fixiert ist als das andere, das zweite Führungselement. Bei diesem zweiten Führungselement kann zwar eine vollständige Verklemmung vorteilhaft sein. Es ist aber auch möglich, insbesondere aufgrund baulicher Toleranzen, dass das Fixierelement in Bezug auf das zweite Führungselement ein Bewegungsspiel des zweiten Führungselements bezüglich der zweiten Lageraufnahmeanordnung reduziert.

Alternativ oder ergänzend zu der vorgenannten Verklemmung ist auch eine Verriegelung oder ein formschlüssiger Halt möglich. Vorteilhaft ist es zum Beispiel, wenn das Fixierelement in der Fixier-Schwenkstellung in eine Riegelaufnahme oder Formschlussaufnahme an dem ersten Führungselement oder dem zweiten Führungselement eingreift. So kann beispielsweise zusätzlich zu einer Verklemmung ein Formschluss vorgesehen sein. Kombinationen sind auch denkbar, bei denen beispielsweise eines der Führungselemente durch das Fixierelement geklemmt wird, insbesondere das erste Führungselement, während das andere Führungselement nur formschlüssig durch das Fixierelement gehalten oder verriegelt wird.

Die nachfolgende Maßnahme eignet sich sowohl für eine Fixierung als auch eine Verriegelung. Vorteilhaft ist vorgesehen, dass das das Fixierelement in der Fixier-Schwenkstellung in einander entgegengesetzten Richtungen auf das erste Führungselement und das zweite Führungselement einwirkt.

Das Fixierelement kann sozusagen an den Führungselementen aufgehängt oder gehalten sein. Zweckmäßigerweise ist vorgesehen, dass das das Fixierelement ausschließlich anhand des ersten Führungselements und/oder zweiten Führungselements unverlierbar an dem Stützteil oder der Maschinenbasis gehalten ist. Beispielsweise kann das Fixierelement in der Art eines Bügels an den Führungselementen hängen oder von den Führungselementen gehalten sein.

Eine vorteilhafte Maßnahme sieht vor, dass das Fixierelement eine insbesondere zwischen Profilwänden oder Seitenwänden des Fixierelements vorgesehene Verschiebesicherungskontur aufweist, in die eine Gegenkontur der Maschinenbasis oder des Stützteils zu einer Verschiebesicherung bezüglich der Längsachse eingreift. Die Verschiebesicherungskontur kann aber auch von einer Außenseite des Fixierelements gebildet sein. Vorteilhaft ist jedoch eine Konfiguration, bei der das Fixierelement beispielsweise eine im Querschnitt U-förmige oder V-förmige Ausgestaltung hat, d.h. mindestens zwei einander gegenüberliegende Seitenwände, zwischen denen die bezüglich der Maschinenbasis oder des Stützteils ortsfeste Gegenkontur angeordnet ist und somit eine Verschiebesicherung darstellt.

Vorteilhaft ist vorgesehen, dass das die Fixiereinrichtung an der Maschinenbasis angeordnet ist. Somit ist die Fixiereinrichtung bequem zugänglich.

Weiterhin ist es zweckmäßig, wenn die Führungselemente ortsfest am Stützteil angeordnet sind und relativ zur Maschinenbasis sozusagen verschieblich oder teleskopierbar sind. Es ist aber auch denkbar, dass beispielsweise die stabförmigen Führungselemente ortsfest an der Maschinenbasis angeordnet sind und das Stützteil relativ zu den Führungselementen bewegt wird.

Die Führungselemente können beispielsweise Rundstäbe oder Profilstäbe oder beides umfassen.

Es sei erwähnt, dass das erste Führungselement, welches ein Schwenklager für das Fixierelement bereitstellt, zumindest im Lagerbereich für das Fixierelement eine kreisrunde Kontur vorteilhaft aufweist. Außerhalb dieses Lagerbereichs kann das erste Führungselement selbstverständlich auch eine nicht kreisrunde Kontur aufweisen. Es ist ferner möglich, dass beispielsweise das zweite Führungselement, welches diese Lagerfunktion nicht aufweisen muss, ein polygonales Profil sein kann oder einen Querschnitt aufweisen kann, der eine Verdrehsicherung für das Fixierelement bereitstellt.

Eine vorteilhafte Maßnahme sieht vor, dass an der Maschinenbasis, insbesondere aneinander entgegengesetzten Seiten der Maschinenbasis, jeweils ein Stützteil mit einem Paar von Führungselementen längsverschieblich parallel zu jeweils einer Längsachse, insbesondere derselben Längsachse, gelagert ist. Durch die vorige Formulierung kommt zum Ausdruck, dass es zwar möglich ist, dass beide Stützteile einander gegenüberliegend und entlang derselben Längsachse verschieblich gelagert sein können. Es können aber auch an zueinander winkeligen Seiten der Maschinenbasis zwei erfindungsgemäß gelagerte und fixierbare Stützteile vorgesehen sein.

Das Stützteil kann beispielsweise in der Art eines Auslegers ausgestaltet sein, der an einer Werkstückkante entlang führbar ist. Der Ausleger ist beispielsweise an einem Sägetisch oder Führungstisch der Werkzeugmaschine, die in diesem Fall vorzugsweise eine Hand-Werkzeugmaschine ist, bezüglich der Längsachse verschieblich gelagert. Auf diese Weise kann beispielsweise eine Führungsfläche oder Führungskontur des Auslegers in unterschiedlichen Längsabständen bezüglich der Längsachse relativ zum Sägetisch oder Führungstisch der Werkzeugmaschine fixiert werden.

Vorteilhaft ist vorgesehen, dass das die Stelleinrichtung an einem Fußteil, insbesondere einem Fuß, der Maschinenbasis zum Abstellen auf einem Untergrund der Werkzeugmaschine angeordnet ist und/oder neben einer Auflagefläche oder Stützfläche zum Auflegen oder Stützen eines Werkstücks angeordnet ist. Die Maschinenbasis kann also auf einem Untergrund abgestellt werden. An dem Fußteil oder Fuß der Maschinenbasis befindet sich die Stelleinrichtung und ist somit bequem zugänglich.

In Bezug auf das Stützteil ist es vorteilhaft, wenn es mindestens einen Stützfuß zum Abstellen auf einem Untergrund aufweist. Somit kann das Stützteil sozusagen als Verlängerung oder Stützausleger bezüglich der Maschinenbasis ohne weiteres verwendet werden.

Ein vorteilhaftes Konzept sieht vor, dass das Stützteil eine insbesondere mit einer Auflagefläche der Maschinenbasis fluchtenden Auflagefläche zum Auflegen eines Werkstücks und/oder eine insbesondere mit einer Anlagefläche der Maschinenbasis fluchtende Anlagefläche zum Anlegen eines Werkstücks und/oder eine Führungsfläche zum Führen entlang eines Werkstücks aufweist. Wenn das Stützteil anhand der Linearführung bzw. anhand der Führungselemente von der Maschinenbasis weg verstellt wird, steht eine entsprechend weit von der Maschinenbasis entfernte Auflagefläche und/oder Anlagefläche zur Verfügung. Bevorzugt ist es, wenn diese entferntere Auflagefläche oder Anlagefläche mit einer weiteren Auflagefläche oder Anlagefläche fluchtet, sodass eine vergrößerte Gesamt-Auflagefläche oder Gesamt-Anlagefläche für das Werkstück bereit steht. Weiterhin sei erwähnt, dass bei mehreren Stützteilen dieser Art die Gesamt-Auflagefläche oder Gesamt-Anlagefläche der Werkzeugmaschine variabel einstellbar ist.

Vorteilhaft ist die Werkzeugaufnahme, insbesondere die Antriebsbaugruppe als Ganzes, um eine Kapp-Schwenkachse anhand eines Kapp-Schwenklagers zu einer Auflagefläche für das Werkstück hin und von der Auflagefläche weg schwenkbar. Die Kapp-Schwenkachse verläuft bei Gebrauch der Werkzeugmaschine vorzugsweise horizontal. Die Werkzeugmaschine kann dann z.B. eine Kappsäge sein.

Ein vorteilhaftes Konzept, insbesondere bei einer Ausgestaltung der Werkzeugmaschine als Zugsäge oder als Kapp-Zug-Säge sieht vor, dass die Antriebsbaugruppe bezüglich der Schwenkbasis an einer Linearführung zur Durchführung von Längsschnitten mit dem Trennwerkzeug entlang einer Längsachse linear gelagert ist. Die Linearführung umfasst beispielsweise mindestens einen langgestreckten Führungskörper, insbesondere eine Führungsstange oder einen Führungsstab, welcher sich entlang der Längsachse erstreckt. Der mindestens eine langgestreckte Führungskörper, insbesondere die Führungsstange oder der Führungsstab, kann relativ zu der Maschinenbasis der Werkzeugmaschine beweglich sein. Beispielsweise ist dann an einem turmartigen Träger, eine Lageraufnahme für den mindestens einen langgestreckten Führungskörper vorgesehen. Es ist auch möglich, dass der langgestreckte Führungskörper ortsfest an der Maschinenbasis angeordnet ist. Insbesondere ist es bevorzugt, wenn die Antriebsbaugruppe in der Art eines Schlittens relativ zu der Maschinenbasis, insbesondere an einem Träger, der vor die Maschinenbasis nach oben vorsteht, linear beweglich gelagert ist. An dem Schlitten ist zweckmäßigerweise das Kapp-Schwenklager vorgesehen.

Bevorzugt ist es, wenn die Antriebsbaugruppe bezüglich der Maschinenbasis um eine Schräg-Schwenkachse rechtwinkelig anhand eines Schräg-Schwenklagers bezüglich der Maschinenbasis schwenkbar gelagert ist. Somit können beispielsweise Gehrungsschnitte oder Schrägschnitte in das Werkstück durchgeführt werden.

Eine Kombination beider vorgenannter Maßnahmen sieht vor, dass die Antriebsbaugruppe einerseits linear beweglich und andererseits schrägschwenkbar bezüglich der Maschinenbasis gelagert ist. Es ist vorteilhaft, dass ein Träger für die Antriebsbaugruppe anhand des Schrägstelllagers bezüglich der Maschinenbasis um eine Schrägschwenkachse schwenkbar ist und an dem Träger die Linearführung für die Antriebsbaugruppe vorgesehen ist. Beispielsweise steht der mindestens eine lang gestreckte oder stangenartige Führungskörper vor den Träger vor und erstreckt sich insbesondere oberhalb einer Auflagefläche für das Werkstück.

Das mindestens eine Stützteil kann eine von der Maschinenbasis lösbare Komponente bilden. Beispielsweise kann mindestens ein Längsanschlag, an dem das Stützteil bei maximaler Längsverstellung relativ zu Maschinenbasis anschlägt, entfernbar sein, insbesondere werkzeuglos. Es kann auch ein beweglicher Längsanschlag vorgesehen sein, der lösbar entfernbar ist. Ein derartiger Längsanschlag ist vorzugsweise an einem oder beiden der Führungselemente angeordnet. Es ist aber auch möglich, dass ein Längsanschlag dauerhaft am Führungselement vorgesehen ist, sodass das Stützteil eine von der Maschinenbasis unlösbare Komponente bildet.

Nachfolgend wird ein Ausführungsbeispiel der Erfindung anhand der Zeichnung erläutert. Es zeigen:
- Figur 1: eine perspektivische Schrägansicht auf eine Werkzeugmaschine in Gestalt einer Zug-Kappsäge,
- Figur 2: die Werkzeugmaschine gemäß Figur 1, mit Stützteilen, die von einer Maschinenbasis weg verstellt sind,
- Figur 3: die Werkzeugmaschine gemäß Figur 2 von schräg unten,
- Figur 4: eine Seitenansicht der Werkzeugmaschine gemäß vorstehender Figuren mit einem teilweise geschnittenen Seitenbereich, und
- Figur 5: ein Detail D1 aus Figur 4.

Eine Werkzeugmaschine 10 ist z.B. als eine Kappsäge ausgestaltet. Eine Antriebsbaugruppe 11 der Werkzeugmaschine 10 umfasst einen Antriebsmotor 12, welcher direkt oder über ein nicht dargestelltes Getriebe eine Werkzeugaufnahme 13 antreibt, an der ein Trennwerkzeug 14, beispielsweise ein Sägeblatt, lösbar anordenbar ist. Der Antriebsmotor 12 ist ein elektrischer Antriebsmotor, insbesondere ein bürstenloser Antriebsmotor.

Die Antriebsbaugruppe 11 ist oberhalb einer Auflagefläche 15 zum Auflegen eines Werkstücks W angeordnet. Das Werkstück W kann auf die Auflagefläche 15 aufgelegt und an eine Anlagefläche 16 angelegt werden, um einen Trennschnitt anhand des Trennwerkzeugs 14 durchzuführen.

Die Auflagefläche 15 ist an einem Schwenkteil 17 vorgesehen, welches relativ zu einer Schwenkbasis 18 um die Schwenkachse S schwenkbar ist. Die Schwenkbasis 18 bildet eine Maschinenbasis 20.

Eine Winkelstellung der Werkzeugaufnahme 13 und somit des Trennwerkzeugs 14 relativ zu der Anlagefläche 16 ist durch eine Verschwenkung der Antriebsbaugruppe 11 um eine Schwenkachse S verstellbar, so dass Trennschnitte in unterschiedlichen Winkeln, insbesondere Gehrungswinkeln, in das Werkstück W eingebracht werden können.

Die Antriebsbaugruppe 11 ist an einem Träger 21 gehalten, welcher in der Gebrauchslage nach oben vor das Schwenkteil 17 vorsteht.

Der Träger 21 ist mit dem Schwenkteil 17 verbunden. Eine Variante kann vorsehen, dass der Träger 21 unbeweglich fest mit dem Schwenkteil 17 verbunden ist, so dass das Trennwerkzeug 14 in einem festen Winkel, insbesondere rechtwinkelig zu der Anlagefläche 16 und der Auflagefläche 15 orientiert ist. Eine bevorzugte Ausführungsform sieht jedoch vor, dass der Träger 21 über ein Schrägschwenklager 22 an dem Schwenkteil 17 um eine Schrägstellachse S2 schwenkbar gelagert ist, sodass auch schräge Schnitte in das Werkstück W einbringbar sind.

Das Schrägschwenklager 22 weist beispielsweise ein Lagerteil 23 auf, welches am Schwenkteil 21 angeordnet ist, insbesondere an einem Schwenkteil-Körper 19 des Schwenkteils 17, sowie ein Lagerteil 24 am Träger 21, die durch ein nicht dargestelltes Lagerachselement miteinander drehbar verbunden sind. Die Lagerteile 23, 24 sind relativ zueinander fixierbar, wobei von einer Fixiereinrichtung 25 lediglich ein Handgriff 26 dargestellt ist. Mithilfe des Handgriffs 26 ist der Träger 21 bezüglich der Schrägschwenkachse S2 an dem Schwenkteil 17 drehfest fixierbar. Dazu wird beispielsweise das in der Zeichnung nicht dargestellte Lagerachselement durch den Handgriff 26 entlang seiner Längsachse betätigt, um die Lagerteile 23, 24 gegeneinander zu verspannen, zu verrasten oder dergleichen. An dem Schrägschwenklager 22 kann auch ein Stellgetriebe zur Einstellung einer Schrägstellposition der Werkzeugaufnahme 13 relativ zur Auflagefläche 15 vorgesehen sein (nicht dargestellt), z.B. eine Stellgetriebe wie in DE 10 2006 059 751 A1 erläutert.

Die Werkzeugmaschine 10 kann zur Energieversorgung des Antriebsmotors 12 einen Anschluss für einen nicht dargestellten Energiespeicher, beispielsweise einen Akkupack und/oder - wie in der Zeichnung dargestellt - einen Netzanschluss 27, beispielsweise ein Netzkabel, zum Anschluss an ein elektrisches Energieversorgungsnetz, beispielsweise 110 V bis 240 V Wechselstrom, aufweisen.

Am Träger 21 könnte die Antriebsbaugruppe 11 unverschieblich gelagert sein. Vorliegend ist jedoch eine Linearführung 30 für die Antriebsbaugruppe 11 vorgesehen, welche Führungskörper 31, beispielsweise Führungsstäbe, aufweist, an denen ein Schlitten 32 entlang einer Längsachse L linear verschieblich gelagert ist. Der Schlitten 32 weist beispielsweise Führungsaufnahmen 33 auf, die von den Führungskörpern 31 durchdrungen sind. Somit kann die Antriebsbaugruppe 11 entlang der Längsachse L verstellt werden, so dass die Werkzeugmaschine 10 die Funktion einer Zugsäge realisiert. Eine Stellbewegung entlang der Längsachse L ist mit einem Pfeil SL in der Zeichnung angedeutet.

Zur Realisierung einer Kapp-Funktion ist die Werkzeugaufnahme 13, insbesondere die Antriebsbaugruppe 11 als Ganzes, anhand eines Kapp-Schwenklagers 35 um eine Kapp-Schwenkachse S3 an dem Schlitten 32 schwenkbar gelagert. Somit kann das Trennwerkzeug 14 um die Kapp-Schwenkachse S3 von der Auflagefläche 15 und somit vom Werkstück W weg oder zur Auflagefläche 15 und somit zum Werkstück W hin geschwenkt werden, was in der Zeichnung durch Pfeile K1, K2 angedeutet ist. Der Bediener greift dazu zweckmäßigerweise die Antriebsbaugruppe 11 an einem Handgriff 28, an dem vorzugsweise auch ein Antriebschalter 29 zum Einschalten und Ausschalten des Antriebsmotors 12 vorgesehen ist.

Die Antriebsbaugruppe taucht beim Schwenken zur Auflagefläche 15 hin zwischen den Führungskörpern 31 durch, wobei das Trennwerkzeug 14 in einen Schlitz 36 am Schwenkteil 17 eintauchen kann.

Wenn die Werkzeugmaschine 10 auf einem ebenen Untergrund abgestellt ist, verläuft die Schwenkachse S vertikal, während die Schwenkachsen S2 und S3 horizontal verlaufen. Die Schwenkachsen S, S2 und S3 sind zueinander rechtwinkelig.

Der Antriebsmotor 12 ist vorzugsweise in einem Motorgehäuse 37 aufgenommen. Für das Trennwerkzeug 14 weist die Antriebsbaugruppe 11 vorzugsweise eine obere Abdeckung 38 sowie eine verstellbare Abdeckung 39 auf, sodass in der Regel nur der in den Schlitz 36 eintauchende Abschnitt und der dem Träger 21 zugewandte Abschnitt des Trennwerkzeugs 14 frei ist.

Vor die Maschinenbasis 20 oder Schwenkbasis 18 stehen seitlich Fußteile 57 vor, deren Füße 58 zum Abstellen auf einem Untergrund vorgesehen sind. Die Fußteile 57 weisen zweckmäßigerweise Auflageflächen 59 auf, die in einer Ebene mit der Auflagefläche 15 des Schwenkteils 17 liegen. Die Fußteile 57 sind mit der Schwenkbasis 18 vorzugsweise fest verbunden, insbesondere einstückig mit derselben.

An den Fußteilen 57 sind Anlagekörper 44 gehalten, die die Anlagefläche 16 bereitstellen. Die beiden Anlagekörper 44 erstrecken sich bis zu den Flachseiten des Trennwerkzeugs 14, erstrecken sich also auch oberhalb der Auflagefläche 15 des Schwenkteils 17. Die Anlagekörper 44 sind beispielsweise plattenartig oder durch Platten gebildet.

Die Auflagefläche 15 kann durch seitlich an der Schwenkbasis 18 oder Maschinenbasis 20 angeordnete Stützausleger 40 vergrößert werden. Die Stützausleger 40 weisen beispielsweise Stützfüße 41 zum Abstellen auf einem Untergrund auf.

Die Stützausleger 40 sind anhand von Führungselementen 42 bezüglich der Schwenkbasis 18 verschieblich gelagert. Vorzugsweise ist vorgesehen, dass die Stützausleger 40 von der Schwenkbasis 18 oder der Maschinenbasis 20 entfernbar sind. Die Stützausleger 40 weisen zweckmäßigerweise Auflageflächen 43 auf, die in einer Ebene mit der Auflagefläche 15 des Schwenkteils 17 liegen.

Vor einen beispielsweise etwa flach zylindrischen Schwenkteil-Grundkörper 45 des Schwenkteils 17 steht ein Betätigungsarm 46 nach radial außen vor. Der Betätigungsarm 46 weist zweckmäßigerweise eine mit der Auflagefläche 15, die am Schwenkteil-Grundkörper 45 vorgesehen ist, verbundene und in gleicher Ebene liegende Auflagefläche 47 auf. Der Schlitz 36 erstreckt sich von der Auflagefläche 15 in die Auflagefläche 47 hinein. Der Betätigungsarm 46 ist weiterhin mit einer Stütze 48 auf einem Untergrund abgestützt. Die Stütze 48 ist zweckmäßigerweise einstellbar und umfasst eine entsprechende Stellschraube 49.

Ein Bediener kann den Betätigungsarm 46 ergreifen, um das Schwenkteil 17 und somit die Antriebsbaugruppe 11 mit der Werkzeugaufnahme 13 um die Schwenkachse S schwenken, was durch Pfeile K2 und K3 angedeutet ist.

Eine Skala 34 an der Schwenkbasis 18 ermöglicht es, einen entsprechenden Stellwinkel oder Schwenkwinkel des Schwenkteils 17 relativ zur Schwenkbasis 18 abzulesen.

Das Schwenkteil 17 und somit die Antriebsbaugruppe 11 ist in verschiedenen Drehwinkelstellungen bezüglich der Schwenkachse S relativ zur Schwenkbasis 18 fixierbar, wozu beispielsweise eine Klemmeinrichtung 50 vorgesehen ist. Die Klemmeinrichtung 50 umfasst eine Klemm-Betätigungshandhabe 51, beispielsweise einen Drehknauf. Die Klemm-Betätigungshandhabe 51 steht beispielsweise vor einen freien Endbereich eines Armkörpers 52 des Betätigungsarms 46 vor, sodass ein Bediener die Klemm-Betätigungshandhabe 51 leicht ergreifen kann, um das Schwenkteil 17 bezüglich der Schwenkbasis 18 zu schwenken. Weiterhin kann der Bediener beispielsweise mit seiner Handinnenfläche die Klemm-Betätigungshandhabe 51 umgreifen und somit drehbetätigen, um die Klemmeinrichtung 50 zwischen einer das Schwenkteil 17 bezüglich der Schwenkbasis 18 klemmenden Klemmstellung und einer Freigabestellung zu verstellen, in der das Schwenkteil 17 bezüglich der Schwenkbasis 18 um die Schwenkachse S verstellt werden kann.

Beispielsweise steht ein stabförmiges Klemmelement 53, das sich in Längsrichtung des Betätigungsarms 46 erstreckt, mit einem freien Endbereich zu einer Klemmkontur 54 der Schwenkbasis 18 vor. Das Klemmelement 53 kann beispielsweise in ein bezüglich des Betätigungsarms 46 ortsfestes Gewinde, beispielsweise an einer Mutter, eingeschraubt und aus dem Gewinde ausgeschraubt werden, wobei das Klemmelement 53 aus einer Klemmstellung in eine Freigabestellung und umgekehrt entlang seiner Längsachse verstellt wird. In der Klemmstellung ist das freie Ende des Klemmelements 53, dessen Stirnseite, gegen die Klemmkontur 54 geklemmt oder gedrückt, in der Freigabestellung von der Klemmkontur 54 beabstandet. Das Klemmelement 53 ist im Bereich der Klemm-Betätigungshandhabe 51 in einem Lagerkörper 56 drehbar gelagert. Der Lagerkörper 56 hat eine beispielsweise zylindrische Gestalt. Der Lagerkörper 56 hat eine Lageraufnahme 57, die vom Klemmelement 53 durchdrungen ist.

Mit der Klemmeinrichtung 50 ist eine quasi stufenlose Drehwinkel-Einstellung des Schwenkteils 17 relativ zur Schwenkbasis 18 möglich. Für einen schnellen Arbeitsbetrieb, bei dem vorbestimmte Drehwinkelpositionen des Schwenkteils 17 bezüglich der Schwenkbasis 18 bzw. vorbestimmte Drehwinkelpositionen des Trennwerkzeugs 14/der Werkzeugaufnahme 13 relativ zur Anlagefläche 16 einzustellen sind, erweist sich die nachfolgend erläuterte Rasteinrichtung 60 schnell und effektiv.

Die Rasteinrichtung 60 umfasst ein Rastelement 61, z.B. einen Rastvorsprung, welches anhand eines Betätigungselements 62 außer Eingriff mit Rastgegenkonturen 63 an der Schwenkbasis 18 gebracht werden kann und dann eine Lösestellung einnimmt oder in Eingriff mit einer der Rastgegenkonturen 63 ist, sodass das Schwenkteil 17 bezüglich der Schwenkbasis 18 verrastet und drehfest fixiert ist. Die Rastgegenkonturen 63, z.B. Rastvertiefungen, erstrecken sich bogenförmig um die Schwenkachse S. Die Rastgegenkonturen 63 sind an einer Unterseite der Schwenkbasis 18, also an einer Unterseite der Maschinenbasis 20 vorgesehen. Das Rastelement 61 ist durch eine Federanordnung 65 in eine Raststellung, also in Eingriff mit einer der Rastgegenkonturen 63, belastet.

Das Betätigungselement 62 ist als ein Betätigungshebel ausgestaltet, welcher an einem Betätigungselement-Lager 64 schwenkbar gelagert ist. Ein Griffabschnitt am einen Endbereich des Betätigungselements 62 ist nahe bei der Klemm-Betätigungshandhabe 51 angeordnet, ist also vom Bediener mit einer Hand zu ergreifen und kann in Richtung der Klemm-Betätigungshandhabe 51 geschwenkt werden, so dass das Betätigungselement 62 mit seinem vom Griffabschnitt entfernten Endbereich das Rastelement 61 in eine Lösestellung, also außer Eingriff mit einer der Rastgegenkonturen 63 bringt.

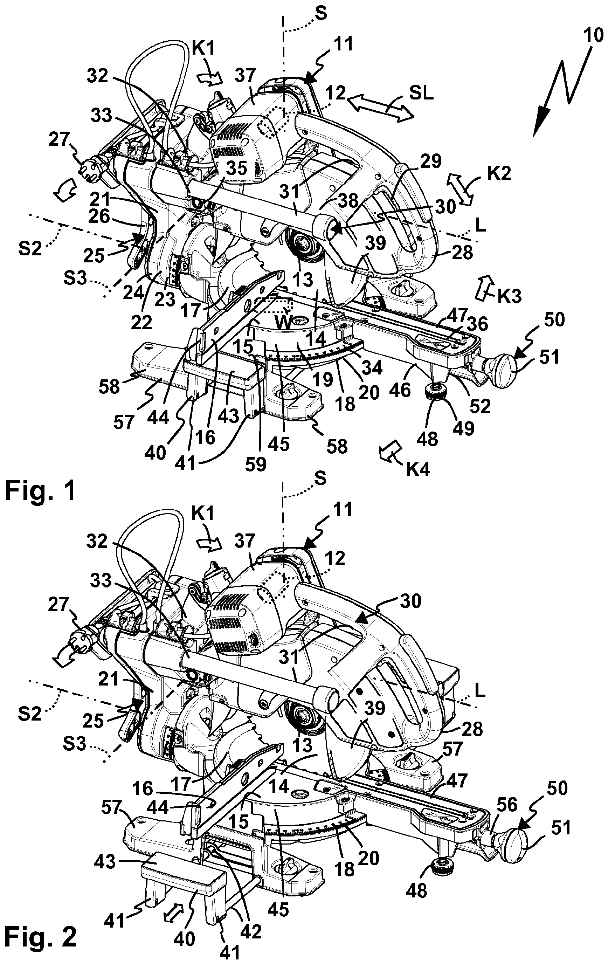

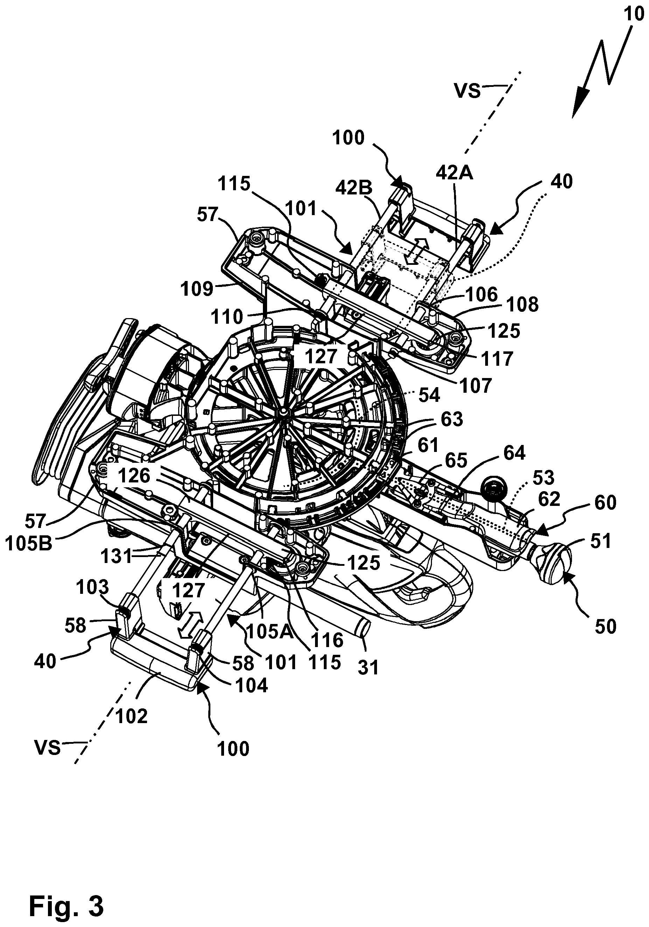

Die Stützausleger 40 bilden Stützteile 100A, 100B, nachfolgend vereinfacht auch als Stützteile 100 bezeichnet, die bezüglich der Maschinenbasis 20 entlang einer Längsachse VS anhand von Längsverstelleinrichtungen 101 längsverstellbar gelagert sind. Die Stützausleger 40 oder Stützteile 100 können anhand der Längsverstelleinrichtungen 101 zwischen einer nahe bei den Fußteilen 57 vorgesehenen Transportstellung (in Figur 1 in durchgezogenen Linien, in Figur 3 gestrichelt dargestellt) und einer von den Fußteilen 57 weiter entfernten Gebrauchsstellung, die in Figur 3 beispielsweise durchgezogenen Linien dargestellt ist, verstellt werden.

Die Stützteile 100 weisen die bereits erwähnten Stützfüße 41 auf, die auf einem Untergrund abstellbar sind. Eine Bodenebene oder Bodenfläche der Stützteile 100, insbesondere der Stützfüße 41, entspricht einer Bodenebene oder Bodenfläche der Fußteile 57 oder der Füße 58.

Oberseitig sind die Auflageflächen 43 der Stützteile 100 fluchtend mit den Auflageflächen 59 der Fußteile 57 sowie der Auflagefläche 15 des Schwenkteils 17, sodass insgesamt eine großflächige Ablage oder Abstützung des Werkstücks W möglich ist. Insbesondere können auch lang gestreckte Werkstücke W, beispielsweise Kanthölzer oder dergleichen, nicht nur auf der Maschinenbasis 20, das heißt auf der Auflagefläche 15 und den Auflageflächen 59 abgelegt werden, sondern auch an den seitlichen Verlängerungen, den Stützteilen 100 mit ihren oberseitigen Auflageflächen 43.

Die Stützfüße 41 stehen beispielsweise U-förmig von einem Tragkörper 102 ab. Beispielsweise sind die Stützteile 100 als Stütz-Schemel ausgestaltet.

Die Führungselemente 42 sind stangenförmig oder stabförmig. Beispielsweise sind die Führungselemente 42 von im Querschnitt kreisrunden Profilkörpern gebildet.

Die Führungselemente 42 sind bezüglich der Stützteile 100 unverschieblich. Beispielsweise sind die Führungselemente 42 in Aufnahmen 103 an den Stützfüßen 41 der Stützteile 100 aufgenommen und dort anhand von Fixiermitteln 104 fixiert, beispielsweise anhand von Splintringen, einer Verklebung, Verschraubung oder dergleichen.

Gegenüber der Maschinenbasis 20 sind die Führungselemente 42 verschieblich gelagert. An der Maschinenbasis, insbesondere an den Fußteilen 57, sind Lageraufnahmeanordnungen 105A und 105B, nachfolgend teilweise vereinfacht als Lageraufnahmeanordnungen 105 bezeichnet, für die Führungselemente 42 vorgesehen, die zur Unterscheidung auch als Führungselemente 42A und 42B bezeichnet werden. Die Lageraufnahmeanordnungen 105 weisen in einem Abstand zueinander angeordnete Lageraufnahmen 106, 107 auf. Die Lageraufnahmen 106, 107 sind beispielsweise an Seitenwänden 108, 109 der Fußteile 57 vorgesehen. Die Führungselemente 42 sind in den Lageraufnahmen 106, 107 parallel zur Längsachse VS verschieblich gelagert.

An den von den Stützteilen 100 abgewandten Endbereichen sind an den Führungselementen 42 zweckmäßigerweise Anschlagelemente 110 vorgesehen, die bei maximaler Entfernung der Stützteile 100 von den Fußteilen 57, d.h. einem maximalen Auszug der Längsverstelleinrichtungen 101, an der dem Schwenkteil 17 zugewandten Seitenwand 109 anschlagen. Somit ist sichergestellt, dass die Führungselemente 42 stets in Eingriff mit beiden Lageraufnahmen 106, 107 sind.

Es versteht sich, dass bei einer erfindungsgemäßen Werkzeugmaschine wahlweise vorgesehen sein kann, dass Stützteile von der Maschinenbasis lösbar sind, beispielsweise indem beim obigen Ausführungsbeispiel die Anschlagelemente 110 entfernt werden oder inaktiviert werden. Bevorzugt ist jedoch eine sozusagen unlösbare Konfiguration, bei der die Stützteile zwar längsverstellbar an der Maschinenbasis gelagert, jedoch unverlierbar sind.

Die Handhabung der Stützteile 100, insbesondere die Längsverstellung anhand der Längsverstelleinrichtungen 101 und Fixierung der Stützteile 100 relativ zu Maschinenbasis 20 ist ergonomisch günstig und effizient. Das wird nachfolgend deutlicher.

Zur Längsfixierung der Stützteile 100 bezüglich der Maschinenbasis 20 dienen Fixiereinrichtungen 115, die jeweils ein Fixierelement 116 aufweisen, welches anhand einer manuell betätigbaren Stelleinrichtung 120 betätigbar ist.

Das Fixierelement 116 umfasst einen Fixierkörper 117 mit Lageraufnahmen 118, die vom Führungselement 42A durchdrungen sind, und Lageraufnahmen 119, die vom Führungselement 42B durchdrungen sind. Die Lageraufnahmen 118 dienen zum schwenkbaren Lagern des Fixierelements 116 am Führungselement 42A.

Die Stelleinrichtung 120 umfasst ein Stellglied 121, welches entlang einer Stellachse SX verstellbar ist. Das Stellglied 121 ist beispielsweise anhand eines Schraubgewindes in eine Schraubaufnahme 122 eingeschraubt. Die Schraubaufnahme 122 ist bezüglich des Fußteils 57 ortsfest, beispielsweise an einer ortsfest am Fußteil 57 angeordneten Mutter 123 vorgesehen. Die Mutter 123 ist beispielsweise in einer Aufnahme 111 des Fußteils 57 angeordnet. Vor eine Oberseite, beispielsweise eine Wand 112, des Fußteils 57 steht ein Kopf des Stellglieds 121 vor, an welchem eine manuell ergreifbare Betätigungshandhabe 124 angeordnet ist. Die Betätigungshandhabe 124 umfasst beispielsweise einen Drehknauf, welcher mit den Fingern einer Bedienhand ergreifbar ist. Ergonomisch günstig ist es, dass die Betätigungshandhabe 124 am Fußteil 57 neben der Auflagefläche 57 oberseitig angeordnet ist, d.h. von oben her ergreifbar ist. Weiterhin ist es zweckmäßig, dass die Betätigungshandhaben 124 jeweils an der Vorderseite der Werkzeugmaschine 10, also an der dem Betätigungsarmen 46 zugewandten Seite der Werkzeugmaschine 10 vorgesehen sind, d.h. dass sie von der Vorderseite der Werkzeugmaschine 10 her ergreifbar sind.

Die Fixierelemente 116 sind zwischen den Seitenwänden 108, 109 der Fußteile 57 angeordnet.

An den Seitenwänden 127 sind die Lageraufnahmen 118, 119 vorgesehen.

Die Fixierelemente 116 sind beispielsweise als Profilkörper ausgestaltet, bei denen von einer Bodenwand 126 Seitenwände 127 abstehen. Stabförmige oder stangenförmige, das heißt nicht als Hohlprofile oder Winkelprofile ausgestaltete Fixierelemente sind aber auch möglich.

Von der Wand 122 eines Fußteils 57 steht eine Gegenkontur 128 in einen Zwischenraum zwischen den Seitenwänden 127 der Profilkörper oder Fixierelemente 116 vor, sodass die Fixierelemente 116 bezüglich der Längsachse VS unverschieblich an den Fußteilen 57 festgelegt sind. Die Gegenkontur 128 wird beispielsweise von einer Wand 113, insbesondere einer zylindrischen Wand, bereitgestellt, die die Aufnahme 111 begrenzt. Allerdings sei bemerkt, dass zwischen der Gegenkontur und den Seitenwänden 127 ein gewisses Bewegungsspiel vorhanden ist, damit die Fixierelemente 116 relativ zum Körper der Fußteile 57 beweglich, insbesondere schwenkbar, sind.

Anhand der Betätigungshandhabe 124 kann das Stellglied 121 in der Schraubaufnahme 122 längs der Stellachse SX hin und her geschraubt werden, wobei das Stellglied 121 auf einen Kraftarm 125 des jeweiligen Fixierelements 116 drückt, welcher an einer vom Führungselement 42B abgewandten Seite seitlich vor das Führungselement 42A vorsteht. Beispielsweise ist am Kraftarm 125 eine Betätigungsfläche 132 vorgesehen, auf welche der Kopf oder die Stirnseite des Stellglieds 121 einwirkt.

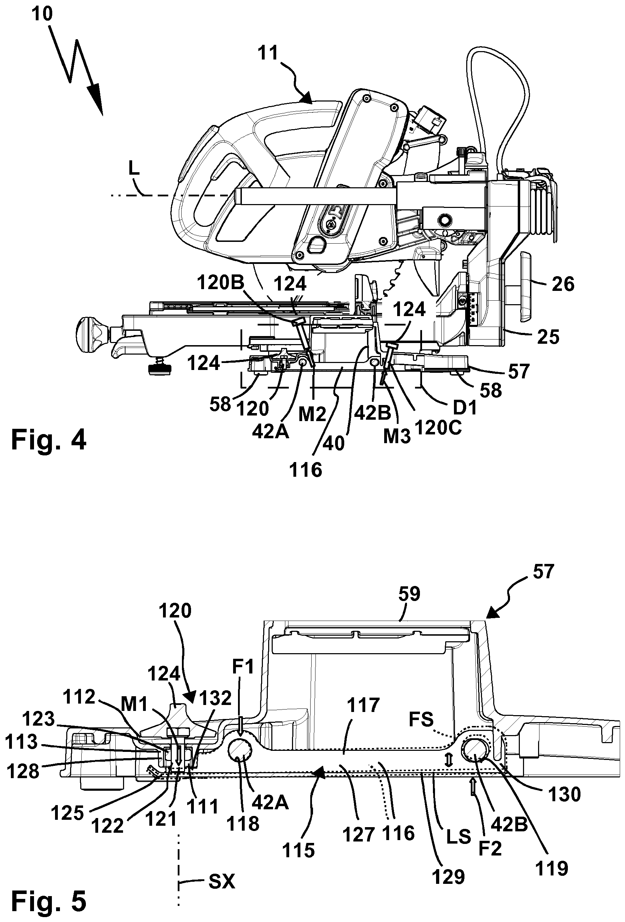

Wenn das Stellglied 121 zu dem Fixierelement 116 hin verstellt wird, schwenkt das Fixierelement 116 aus einer Löse-Schwenkstellung LS (in durchgezogenen Linien in Figur 5 eingezeichnet) in eine Fixier-Schwenkstellung FS (gestrichelt in Figur 5 dargestellt).

In der Löse-Schwenkstellung LS ist die jeweilige Längsverstelleinrichtung 101 freigegeben, das heißt die Stützteile 101 können relativ zur Maschinenbasis 20 entlang der Längsachse VS verstellt werden, während die Stützteile 101 in der Fixier-Schwenkstellung FS bezüglich Maschinenbasis 20 fixiert sind.

In der Fixier-Schwenkstellung FS übt das Stellglied 121 eine Stellkraft M1 auf den Kraftarm 124 aus, wodurch das Fixierelement 116 im Bereich der Lageraufnahmen 118 mit einer Fixierkraft F1 auf das Führungselement 42A einwirkt. Auf diesem Wege wird das Führungselement 42A quer zu den Lageraufnahmen 106, 107 der Lageraufnahmeanordnung 105A kraftbeaufschlagt und mit den Lageraufnahmen 106, 107 verspannt oder verklemmt. Damit ist eine Längsverschieblichkeit des Führungselements 42A relativ zum Fußteil 57 nur noch mit erheblicher Kraftaufwendung möglich, was einer Klemmfixierung des Stützteils 100 relativ zur Maschinenbasis 20 entspricht.

Aber auch das Führungselement 42B erfährt eine Klemmkraft oder Fixierkraft, indem nämlich das Fixierelement 116 mit einem Betätigungsarm 129 auf das Führungselement 42B einwirkt, nämlich mit einer Fixierkraft F2. Dadurch wird die Beweglichkeit des Führungselements 42B relativ zu der Lageraufnahmeanordnung 105B unterbunden oder jedenfalls erheblich verringert, sodass auch im Bereich des Führungselements 42B eine Verklemmung oder Verspannung durch die Fixiereinrichtung 115 realisiert ist.

Die Fixierkräfte F1 und F2 wirken einander entgegengesetzt auf das Führungselement 42A und das Führungselement 42B, in der Zeichnung und/oder bei Gebrauch der Werkzeugmaschine 10 beispielsweise von oben und von unten her.

Die Lageraufnahmen 118 befinden sich zwischen dem Kraftarm 125 und dem Betätigungsarm 129. Die Lageraufnahmen 118 sind vorliegend kreisrund. Sie ermöglichen eine optimale Schwenkbarkeit des Fixierelements 116 um und am Führungselement 42A.

Die Lageraufnahmen 119 sind am Endbereich 130 des Betätigungsarms 129 vorgesehen. Die Lageraufnahmen 119 haben einen größeren Querschnitt als der Querschnitt des Führungselements 42B. Beispielsweise sind die Lageraufnahmen 119 als Langlöcher ausgestaltet. Somit ist das Führungselement 42B mit einem gewissen Bewegungsspiel zumindest dann, wenn das Fixierelement 116 in der Löse-Schwenkstellung LS ist, in den Lageraufnahmen oder der einzigen Lageraufnahme 119 aufgenommen. Wenn das Fixierelement 116 in die Fixier-Schwenkstellung FS verstellt ist, liegt zumindest eine Innenkontur der Lageraufnahme 119 oder der Lageraufnahmen 119 im Sinne eines Klemmsitzes oder einer Verriegelung an dem Führungselement 42B an, sodass dessen Verschieblichkeit entlang der Längsachse VS zumindest eingeschränkt, vorzugsweise jedoch unterbunden ist.

Für eine Verriegelung des Führungselements 42B können beispielsweise Riegelaufnahmen oder Formschlussaufnahmen 131, insbesondere Nuten vorgesehen sein, in die das Fixierelement 116, beispielsweise mit den Seitenwänden 127, in in durch die Abstände der Formschlussaufnahmen 131 zueinander vorbestimmten Abständen eingreifen kann. Es versteht sich, dass eine derartige Verriegelung auch nur für eine einzige Position eines Stützteils 100 relativ zur Maschinenbasis 20 vorgesehen sein kann.

Anhand von Figur 4 soll deutlich werden, dass selbstverständlich auch andere Positionen, insbesondere Wirkpositionen, einer jeweiligen Stelleinrichtung bezüglich eines Fixierelements möglich sind.

So kann beispielsweise eine Stelleinrichtung 120B auf den Betätigungsarm 129 im Zwischenbereich zwischen den Führungselementen 42A und 42B auf das Fixierelement 116 einwirken, insbesondere mit einer Stellkraft M2.

Möglich wäre aber auch eine Stelleinrichtung 120C, die beispielsweise am Endbereich 130 auf das Fixierelement 116 mit einer Stellkraft M3 wirkt, so dass dieses um das Führungselement 42B schwenkt. Dann entfaltet das Fixierelement 116 beispielsweise bevorzugt seine Klemmkraft unmittelbar am Führungselement 42B. Es sei bemerkt, dass auch bei der Konfiguration mit der Stelleinrichtung 120C das Schwenklager durch die Lageraufnahmen 118 und das Führungselement 42A bereitgestellt werden kann.

Die Erfindung betrifft zusammenfassend also eine Werkzeugmaschine zur Bearbeitung von Werkstücken anhand eines Werkzeugs, wobei die Werkzeugmaschine eine an einer Maschinenbasis angeordnete Antriebsbaugruppe mit einem Antriebsmotor und einer durch den Antriebsmotor antreibbaren Werkzeugaufnahme für das Werkzeug aufweist, wobei an der Maschinenbasis ein Stützteil zum Abstützen eines Werkstücks oder der Werkzeugmaschine an einem Werkstück anhand einer Längsverstelleinrichtung bezüglich einer Längsachse längsverstellbar gelagert ist, wobei die Längsverstelleinrichtung zwei stabförmige erste und zweite in ersten und zweiten Lageraufnahmeanordnungen entlang der Längsachse längsverschieblich gelagerte Führungselemente aufweist, wobei die Werkzeugmaschine eine Fixiereinrichtung zum Fixieren der Führungselemente relativ zu den Lageraufnahmeanordnungen bezüglich der Längsachse aufweist, wobei die Fixiereinrichtung eine manuell betätigbare Stelleinrichtung und ein durch die Stelleinrichtung zwischen einer das Stützteil gegenüber der Maschinenbasis bezüglich der Längsachse verschiebefest fixierenden Fixierstellung und einer eine Verschieblichkeit des Stützteils gegenüber der Maschinenbasis ermöglichenden Lösestellung betätigbares Fixierelement aufweist. Das Fixierelement ist an dem ersten Führungselement schwenkbar gelagert und durch die Stelleinrichtung zwischen einer Löse-Schwenkstellung, bei der die Führungselemente an den Lageraufnahmeanordnungen verschieblich sind, und einer Fixier-Schwenkstellung verstellbar, bei der das erste Führungselement bezüglich der ersten Lageraufnahmeanordnung und/oder das zweite Führungselement bezüglich der zweiten Lageraufnahmeanordnung gegenüber einer Verschiebung parallel zu der Längsachse fixiert ist.

## Patentansprüche

1. Werkzeugmaschine, insbesondere mobile Werkzeugmaschine (10) oder Hand-Werkzeugmaschine, zur Bearbeitung von Werkstücken anhand eines Werkzeugs, wobei die Werkzeugmaschine (10) eine an einer Maschinenbasis (20) angeordnete Antriebsbaugruppe (11) mit einem Antriebsmotor und einer durch den Antriebsmotor antreibbaren Werkzeugaufnahme (13) für das Werkzeug, insbesondere für ein Trennwerkzeug (14), aufweist, wobei an der Maschinenbasis (20) ein Stützteil (100) zum Abstützen eines Werkstücks (W) an der Werkzeugmaschine (10) relativ zu der Werkzeugaufnahme (13) oder zum insbesondere führenden Abstützen der Werkzeugmaschine (10) an einem Werkstück (W) anhand einer Längsverstelleinrichtung (101) bezüglich einer Längsachse (VS) längsverstellbar gelagert ist, wobei die Längsverstelleinrichtung (101) zwei parallel zu der Längsachse (VS) verlaufende stabförmige erste und zweite Führungselemente (42A, 42B) aufweist, die in ersten und zweiten Lageraufnahmeanordnungen (105A, 105B) entlang der Längsachse (VS) längsverschieblich gelagert sind, wobei die Werkzeugmaschine (10) eine Fixiereinrichtung (115) zum Fixieren der Führungselemente (42A, 42B) relativ zu den Lageraufnahmeanordnungen (105A, 105B) bezüglich der Längsachse (VS) aufweist, wobei die Fixiereinrichtung (115) eine manuell betätigbare Stelleinrichtung (120) und ein durch die Stelleinrichtung (120) zwischen einer das Stützteil (100) gegenüber der Maschinenbasis (20) bezüglich der Längsachse (VS) verschiebefest fixierenden Fixierstellung und einer eine Verschieblichkeit des Stützteils (100) gegenüber der Maschinenbasis (20) ermöglichenden Lösestellung betätigbares Fixierelement (116) aufweist, **dadurch gekennzeichnet, dass** das Fixierelement (116) an einem Lagerabschnitt des ersten Führungselements (42) schwenkbar gelagert ist und durch die Stelleinrichtung (120) zwischen einer Löse-Schwenkstellung (LS), bei der die Führungselemente (42) an den Lageraufnahmeanordnungen (105A, 105B) verschieblich sind, und einer Fixier-Schwenkstellung (FS) verstellbar ist, bei der das erste Führungselement (42A) bezüglich der ersten Lageraufnahmeanordnung (105A) und/oder das zweite Führungselement (42B) bezüglich der zweiten Lageraufnahmeanordnung (105B) gegenüber einer Verschiebung parallel zu der Längsachse (VS) fixiert ist.

2. Werkzeugmaschine (10) nach Anspruch 1, **dadurch gekennzeichnet, dass** die Stelleinrichtung (120) in einem kleineren Abstand zu dem ersten Führungselement (42A) als zu dem zweiten Führungselement (42B) auf das Fixierelement (116) einwirkt und/oder in dem kleineren Abstand angeordnet ist oder dass die Stelleinrichtung (120) in einem größeren Abstand zu dem ersten Führungselement (42A) als zu dem zweiten Führungselement (42B) auf das Fixierelement (116) einwirkt und oder in dem größeren Abstand angeordnet ist.

3. Werkzeugmaschine nach Anspruch 1 oder 2, **dadurch gekennzeichnet, dass** das Führungselement (42A), welches näher in einem Einwirkungsbereich der Stelleinrichtung (120) auf das Fixierelement (116) angeordnet ist, mit einer größeren Kraft gegenüber einer Verschiebung bezüglich der Längsachse (VS) durch das Fixierelement (116) gehalten ist als das von dem Einwirkungsbereich entferntere Führungselement (42B).

4. Werkzeugmaschine nach einem der vorhergehenden Ansprüche, **dadurch gekennzeichnet, dass** die Stelleinrichtung (120) außerhalb eines Zwischenraums zwischen den Führungselementen (42) angeordnet ist und/oder auf das Fixierelement (116) einwirkt und/oder dass das Fixierelement (116) mindestens eine Lageraufnahme aufweist, die vom ersten Führungselement (42A) oder zweiten Führungselement (42B) durchdrungen ist.

5. Werkzeugmaschine nach einem der vorhergehenden Ansprüche, **dadurch gekennzeichnet, dass** eine Lageraufnahme des Fixierelements (116), in der das zweite Führungselement (42B) aufgenommen ist, insbesondere anhand eines Langlochs ein Bewegungsspiel des Fixierelements (116) quer zu der Längsachse (VS), insbesondere entlang einer Bewegungsachse, die zwischen den Führungselementen (42A, 42B) verläuft, ermöglicht.

6. Werkzeugmaschine nach einem der vorhergehenden Ansprüche, **dadurch gekennzeichnet, dass** eine Lageraufnahme (188) des Fixierelements (116) für das erste Führungselement (42A) als eine Drehlageraufnahme zum Schwenken des Fixierelements (116) relativ zu dem ersten Führungselement (42A) ausgestaltet ist und für das zweite Führungselement (42B) eine insbesondere von dem zweiten Führungselement (42B) durchdrungene Fixierkontur, insbesondere eine Lageraufnahme (119), vorgesehen ist und/oder dass die erste Lageraufnahmeanordnung (105A) und/oder die zweite Lageraufnahmeanordnung (105B) ein Paar von Lageraufnahmen (107, 108) aufweist, zwischen denen das Führungselement (42A, 42B) angeordnet ist.

7. Werkzeugmaschine nach einem der vorhergehenden Ansprüche, **dadurch gekennzeichnet, dass** das Fixierelement (116) in der Fixier-Schwenkstellung (FS) in einem Klemmsitz an dem ersten Führungselement (42A) und/oder dem zweiten Führungselement (42B) anliegt und/oder dass das Fixierelement (116) in der Fixier-Schwenkstellung (FS) in eine Riegelaufnahme oder Formschlussaufnahme (131) an dem ersten Führungselement (42A) oder dem zweiten Führungselement (42B) eingreift.

8. Werkzeugmaschine nach einem der vorhergehenden Ansprüche, **dadurch gekennzeichnet, dass** das Fixierelement (116) in der Fixier-Schwenkstellung (FS) in einander entgegengesetzten Richtungen auf das erste Führungselement (42A) und das zweite Führungselement (42B) einwirkt und/oder durch eine Federanordnung und/oder seine Gewichtskraft in Richtung der Löse-Schwenkstellung (LS) belastet ist.

9. Werkzeugmaschine nach einem der vorhergehenden Ansprüche, **dadurch gekennzeichnet, dass** das das Fixierelement (116) ausschließlich anhand des ersten Führungselements (42A) und/oder zweiten Führungselements (42B) unverlierbar an dem Stützteil (100) oder der Maschinenbasis (20) gehalten ist und/oder dass das Fixierelement (116) eine insbesondere zwischen Profilwänden oder Seitenwänden (127) des Fixierelements (116) vorgesehene Verschiebesicherungskontur aufweist, in die eine Gegenkontur (128) der Maschinenbasis (20) oder des Stützteils (100) zu einer Verschiebesicherung bezüglich der Längsachse (VS) eingreift.

10. Werkzeugmaschine nach einem der vorhergehenden Ansprüche, **dadurch gekennzeichnet, dass** die Fixiereinrichtung (115) an der Maschinenbasis (20) angeordnet ist und/oder dass an der Maschinenbasis (20), insbesondere einander entgegengesetzten Seiten der Maschinenbasis (20), jeweils ein Stützteil (100) mit einem Paar von Führungselementen (42) längsverschieblich parallel zu jeweils einer Längsachse (VS), insbesondere derselben Längsachse (VS), gelagert ist.

11. Werkzeugmaschine nach einem der vorhergehenden Ansprüche, **dadurch gekennzeichnet, dass** die Stelleinrichtung (120) an einem Fußteil (57), insbesondere einem Fuß, der Maschinenbasis (20) zum Abstellen auf einem Untergrund der Werkzeugmaschine (10) angeordnet ist und/oder neben einer Auflagefläche oder Stützfläche (59) zum Auflegen oder Stützen eines Werkstücks (W) angeordnet ist und/oder eine zum Ergreifen durch einen Bediener geeignete Betätigungshandhabe (124), insbesondere einen Drehknauf, aufweist.

12. Werkzeugmaschine nach einem der vorhergehenden Ansprüche, **dadurch gekennzeichnet, dass** das Stützteil (100) mindestens einen Stützfuß (41) zum Abstellen auf einem Untergrund aufweist.

13. Werkzeugmaschine nach einem der vorhergehenden Ansprüche, **dadurch gekennzeichnet, dass** das Stützteil (100) eine insbesondere mit einer Auflagefläche (15, 59) der Maschinenbasis (20) fluchtende Auflagefläche (43) zum Auflegen eines Werkstücks (W) und/oder eine insbesondere mit einer Anlagefläche (16) der Maschinenbasis (20) fluchtende Anlagefläche zum Anlegen eines Werkstücks (W) und/oder eine Führungsfläche zum Führen entlang eines Werkstücks (W) aufweist.

14. Werkzeugmaschine nach einem der vorhergehenden Ansprüche, **dadurch gekennzeichnet, dass** die Maschinenbasis (20) zum Abstellen auf einem Untergrund ausgestaltet oder vorgesehen ist und/oder dass die Maschinenbasis (20) eine Schwenkbasis (18) bildet, an der ein Schwenkteil (17) um eine Schwenkachse (S) zur Veränderung einer Relativposition der Werkzeugaufnahme (13) für das Werkzeug, insbesondere das Trennwerkzeug (14), und eine zum Anlegen eines Werkstücks (W) vorgesehenen Anlagefläche (16) schwenkbar gelagert ist, wobei zweckmäßigerweise vorgesehen ist, dass das Schwenkteil (17) und/oder die Schwenkbasis (18) eine Auflagefläche (15) und/oder Anlagefläche (16) für das Werkstück (W) und/oder eine Tragbasis für die Antriebsbaugruppe (11) bereitstellt.

15. Werkzeugmaschine nach einem der vorhergehenden Ansprüche, **dadurch gekennzeichnet, dass** die Antriebsbaugruppe (11) bezüglich der Maschinenbasis (20) an einer Linearführung (30) zur Durchführung von Längsschnitten mit dem Trennwerkzeug (14) linear gelagert ist und/oder um eine Schrägschwenkachse (S3) bezüglich der Maschinenbasis (20) schwenkbar gelagert ist und/oder anhand eines Kapp-Schwenklagers (35) zu einer zum Auflegen eines Werkstücks (W) vorgesehenen Werkstück-Auflagefläche (15) hin und von dieser weg schwenkbar gelagert ist.

## Claims

1. Machine tool, in particular mobile machine tool (10) or hand-operated power tool, for the machining of workpieces (W) with the aid of a tool, wherein the machine tool (10) has a drive assembly (11) mounted on a machine base (20) and with a drive motor and a tool holder (13) for the tool, in particular for a cutting tool (14), which may be driven by the drive motor, wherein there is mounted on the machine base (20) with longitudinal adjustment facility a support part (100) for support of a workpiece (W) on the machine tool (10) relative to the tool holder (13) or for support, in particular with guidance, of the machine tool (10) on a workpiece (W) with the aid of a longitudinal adjusting device (101) relative to a longitudinal axis (VS), wherein the longitudinal adjusting device (101) has two bar-shaped first and second guide elements (42A, 42B) running parallel to the longitudinal axis (VS), and mounted in first and second bearing location assemblies (105A, 105B) for longitudinal movement along the longitudinal axis (VS), wherein the machine tool (10) has a fixing device (115) for fixing the guide elements (42A, 42B) relative to the bearing location assemblies (105A, 105B) with reference to the longitudinal axis (VS), wherein the fixing device (115) has a manually operable positioning device (120) and a fixing element (116) operable by the positioning device (120) between a fixing position fixing the support part (100) immovably relative to the machine base (20) with reference to the longitudinal axis (VS) and a release position allowing movement of the support part (100) relative to the machine base (20), **characterised in that** the fixing element (116) is pivotably mounted on a bearing section of the first guide element (42) and may be adjusted by the positioning device (120) between a release-swivel position (LS) in which the guide elements (42) may be moved on the bearing location assemblies (105A, 105B), and a fixing swivel position (FS) in which the first guide element (42A) is fixed relative to the first bearing location assembly (105A) and/or the second guide element (42B) is fixed relative to the second bearing location assembly (105B) against movement parallel to the longitudinal axis (VS).

2. Machine tool (10) according to claim 1, **characterised in that** the positioning device (120) acts on the fixing element (116) at a lesser distance from the first guide element (42A) than from the second guide element (42B), and/or is positioned at the lesser distance, or that the positioning device (120) acts on the fixing element (116) at a greater distance from the first guide element (42A) than from the second guide element (42B), and/or is positioned at the greater distance.

3. Machine tool according to claim 1 or 2, **characterised in that** the guide element (42A), which is located closer in an area of action of the positioning device (120) on the fixing element (116), is held by the fixing element (116) with greater force against any movement relative to the longitudinal axis (VS) than the guide element (42B) which is further from the area of action.

4. Machine tool according to any of the preceding claims, **characterised in that** the positioning device (120) is positioned outside a space between the guide elements (42) and/or acts on the fixing element (116) and/or that the fixing element (116) has at least one bearing location which is penetrated by the first guide element (42A) or the second guide element (42B).

5. Machine tool according to any of the preceding claims, **characterised in that** a bearing location of the fixing element (116) in which the second guide element (42B) is held makes possible movement play of the fixing element (116), in particular with the aid of an elongated hole, transversely to the longitudinal axis (VS), in particular along a movement axis which runs between the guide elements (42A, 42B).

6. Machine tool according to any of the preceding claims, **characterised in that** a bearing location (188) of the fixing element (116) for the first guide element (42A) is designed as a rotary bearing location for pivoting the fixing element (116) relative to the first guide element (42A), and for the second guide element (42B) there is provided a fixing contour, in particular a bearing location (119), which is penetrated by the second guide element (42B), and/or that the first bearing location assembly (105A) and/or the second bearing location assembly (105B) have a pair of bearing locations (107, 108), between which the guide element (42A, 42B) is located.

7. Machine tool according to any of the preceding claims, **characterised in that** the fixing element (116) in the fixing swivel position (FS) has a force fit with the first guide element (42A) and/or the second guide element (42B), and/or that the fixing element (116) in the fixing swivel position (FS) engages in a latching location or form-fit location in the first guide element (42A) or the second guide element (42B).

8. Machine tool according to any of the preceding claims, **characterised in that** the fixing element (116) in the fixing swivel position (FS) acts in opposite directions on the first guide element (42A) and the second guide element (42B), and/or is biased by a spring assembly and/or by its weight in the direction of the release-swivel position (LS).

9. Machine tool according to any of the preceding claims, **characterised in that** the fixing element (116) is held captive on the support part (100) or the machine base (20) solely with the aid of the first guide element (42A) and/or second guide element (42B), and/or that the fixing element (116) has a movement preventing contour, provided in particular between profile walls or side walls (127) of the fixing element (116), in which a mating contour (128) of the machine base (20) or the support part (100) engages for prevention of movement relative to the longitudinal axis (VS).

10. Machine tool according to any of the preceding claims, **characterised in that** the fixing device (115) is provided on the machine base (20) and/or that on the machine base (20), in particular on opposite sides of the machine base (20), in each case there is mounted a support part (100) with a pair of guide elements (42), longitudinally movable parallel to one longitudinal axis (VS) in each case, in particular the same longitudinal axis (VS).

11. Machine tool according to any of the preceding claims, **characterised in that** the positioning device (120) is provided on a base section (57), in particular a foot, of the machine base (20), for setting down on a base of the machine tool (10), and/or is arranged next to a lay-on surface or support surface (59) for the placing or support of a workpiece (W), and/or has an operating handle (124), in particular a rotary knob, suitable for gripping by an operator.

12. Machine tool according to any of the preceding claims, **characterised in that** the support part (100) has at least one supporting foot (41) for setting down on a base.

13. Machine tool according to any of the preceding claims, **characterised in that** the support part (100) has a lay-on surface (43), in particular flush with a lay-on surface (15, 59) of the machine base (20), for the placing of a workpiece (W), and/or a seating surface, in particular flush with a seating surface (16) of the machine base (20), for the seating of a workpiece (W), and/or a guide surface for guiding along a workpiece (W).

14. Machine tool according to any of the preceding claims, **characterised in that** the machine base (20) is designed or provided for setting down on a base, and/or that the machine base (20) forms a swivelling base (18), on which a swivelling section (17) is pivotably mounted around a swivel axis (S) for changing a relative position of the tool holder (13) for the tool, in particular the cutting tool (14), and a seating surface (16) provided for seating of the workpiece (W), wherein it is expediently provided that the swivelling section (17) and/or the swivelling base (18) provide a lay-on surface (15) and/or seating surface (16) for the workpiece (W) and/or a support base of the drive assembly (11).

15. Machine tool according to any of the preceding claims, **characterised in that** the drive assembly (11), relative to the machine base (20), is mounted linearly on a linear guide (30) for making longitudinal cuts with the cutting tool (14), and/or is pivotably mounted around an inclined swivel axis (S3) relative to the machine base (20), and/or is mounted with the aid of a cut-swivel bearing (35) for swivelling towards and away from a workpiece lay-on surface (15) provided for laying on a workpiece (W).

## Revendications

1. Machine-outil, en particulier machine-outil (10) mobile, ou machine-outil à main, pour l'usinage de pièces à l'aide d'un outil, dans laquelle la machine-outil (10) présente un module d'entraînement (11) agencé au niveau d'une base de machine (20) avec un moteur d'entraînement et un logement d'outil (13) pouvant être entraîné par le moteur d'entraînement pour l'outil, en particulier pour un outil de coupe (14), dans laquelle au niveau de la base de machine (20), une partie de support (100) est logée de manière réglable en longueur par rapport à un axe longitudinal (VS) à l'aide d'un dispositif de réglage longitudinal (101) pour supporter une pièce (W) au niveau de la machine-outil (10) par rapport au logement d'outil (13) ou pour supporter en particulier par guidage la machine-outil (10) au niveau d'une pièce (W), dans laquelle le dispositif de réglage longitudinal (101) présente deux premier et deuxième éléments de guidage (42A, 42B) en forme de barre s'étendant parallèlement à l'axe longitudinal (VS), qui sont logés de manière longitudinalement coulissante le long de l'axe longitudinal (VS) dans des premier et deuxième agencements de logement de palier (105A, 105B), dans laquelle la machine-outil (10) présente un dispositif de fixation (115) pour fixer les éléments de guidage (42A, 42B) par rapport aux agencements de logement de palier (105A, 105B) par rapport à l'axe longitudinal (VS), dans laquelle le dispositif de fixation (115) présente un dispositif de réglage actionnable manuellement (120) et un élément de fixation (116) actionnable par le dispositif de réglage (120) entre une position de fixation fixant la partie de support (100) par rapport à la base de machine (20) de manière solidaire en coulissement par rapport à l'axe longitudinal (VS) et une position de libération permettant un coulissement de la partie de support (100) par rapport à la base de machine (20), **caractérisée en ce que** l'élément de fixation (116) est logé de manière pivotante au niveau d'une section de palier du premier élément de guidage (42) et est réglable par le dispositif de réglage (120) entre une position de pivotement de libération (LS), dans laquelle les éléments de guidage (42) sont coulissants au niveau des agencements de logement de palier (105A, 105B), et une position de pivotement de fixation (FS), dans laquelle le premier élément de guidage (42A) est fixé par rapport au premier agencement de logement de palier (105A) et/ou le deuxième élément de guidage (42B) est fixé par rapport au deuxième agencement de logement de palier (105B) par rapport à un coulissement parallèlement à l'axe longitudinal (VS).

2. Machine-outil (10) selon la revendication 1, **caractérisée en ce que** le dispositif de réglage (120) agit sur l'élément de fixation (116) à une plus petite distance par rapport au premier élément de guidage (42A) que par rapport au deuxième élément de guidage (42B) et/ou est agencé à la plus petite distance ou que le dispositif de réglage (120) agit sur l'élément de fixation (116) à une plus grande distance par rapport au premier élément de guidage (42A) que par rapport au deuxième élément de guidage (42B) et/ou est agencé à la plus grande distance.

3. Machine-outil selon la revendication 1 ou 2, **caractérisée en ce que** l'élément de guidage (42A), qui est agencé plus près dans une zone d'action du dispositif de réglage (120) sur l'élément de fixation (116), est maintenu par l'élément de fixation (116) avec une plus grande force par rapport à un coulissement par rapport à l'axe longitudinal (VS) que l'élément de fixation (42B) plus éloigné de la zone d'action.

4. Machine-outil selon l'une quelconque des revendications précédentes, **caractérisée en ce que** le dispositif de réglage (120) est agencé en dehors d'un espace intermédiaire entre les éléments de guidage (42) et/ou agit sur l'élément de fixation (116) et/ou que l'élément de fixation (116) présente au moins un logement de palier, qui est traversé par le premier élément de guidage (42A) ou le deuxième élément de guidage (42B).

5. Machine-outil selon l'une quelconque des revendications précédentes, **caractérisée en ce qu'**un logement de palier de l'élément de fixation (116), dans lequel le deuxième élément de guidage (42B) est reçu, permet en particulier à l'aide d'un trou oblong un jeu de mouvement de l'élément de fixation (116) transversalement à l'axe longitudinal (VS), en particulier le long d'un axe de déplacement, qui s'étend entre les éléments de guidage (42A, 42B).

6. Machine-outil selon l'une quelconque des revendications précédentes, **caractérisée en ce qu'**un logement de palier (188) de l'élément de fixation (116) est configuré pour le premier élément de guidage (42A) en tant que logement de palier rotatif pour le pivotement de l'élément de fixation (116) par rapport au premier élément de guidage (42A), et un contour de fixation traversé en particulier par le deuxième élément de guidage (42B), en particulier un logement de palier (119), est prévu pour le deuxième élément de guidage (42B) et/ou que le premier agencement de logement de palier (105A) et/ou le deuxième agencement de logement de palier (105B) présente une paire de logements de palier (107, 108), entre lesquels l'élément de guidage (42A, 42B) est agencé.

7. Machine-outil selon l'une quelconque des revendications précédentes, **caractérisée en ce que** l'élément de fixation (116) s'appuie dans la position de pivotement de fixation (FS) dans un ajustement serré au niveau du premier élément de guidage (42A) et/ou du deuxième élément de guidage (42B) et/ou que l'élément de fixation (116) entre en prise dans la position de pivotement de fixation (FS) dans un logement de verrou ou logement à complémentarité de forme (131) au niveau du premier élément de guidage (42A) ou du deuxième élément de guidage (42B).

8. Machine-outil selon l'une quelconque des revendications précédentes, **caractérisée en ce que** l'élément de fixation (116) agit dans la position de pivotement de fixation (FS) dans des directions opposées l'une à l'autre sur le premier élément de guidage (42A) et le deuxième élément de guidage (42B) et/ou est chargé par un agencement de ressort et/ou son poids en direction de la position de pivotement de libération (LS).

9. Machine-outil selon l'une quelconque des revendications précédentes, **caractérisée en ce que** l'élément de fixation (116) est maintenu de manière imperdable au niveau de la partie de support (100) ou de la base de machine (20) exclusivement à l'aide du premier élément de guidage (42A) et/ou du deuxième élément de guidage (42B) et/ou que l'élément de fixation (116) présente un contour de blocage de coulissement prévu en particulier entre des parois de profil ou des parois latérales (127) de l'élément de fixation (116), avec lequel entre en prise un contre-contour (128) de la base de machine (20) ou de la partie de support (100) pour un blocage de coulissement par rapport à l'axe longitudinal (VS).

10. Machine-outil selon l'une quelconque des revendications précédentes, **caractérisée en ce que** le dispositif de fixation (115) est agencé au niveau de la base de machine (20) et/ou qu'au niveau de la base de machine (20), en particulier de côtés opposés les uns aux autres de la base de machine (20), respectivement une partie de support (100) avec une paire d'élément de guidage (42) est logée parallèlement de manière longitudinalement coulissante par rapport à respectivement un axe longitudinal (VS), en particulier le même axe longitudinal (VS).

11. Machine-outil selon l'une quelconque des revendications précédentes, **caractérisée en ce que** le dispositif de réglage (120) est agencé au niveau d'une partie de pied (57), en particulier d'un pied, de la base de machine (20) pour la pose sur un support de la machine-outil (10) et/ou est agencé à côté d'une surface d'appui ou surface de support (59) pour l'appui ou le support d'une pièce (W) et/ou présente une poignée d'actionnement (124), en particulier un bouton rotatif, adaptée pour la saisie par un opérateur.

12. Machine-outil selon l'une quelconque des revendications précédentes, **caractérisée en ce que** la partie de support (100) présente au moins un pied de support (41) pour la pose sur un support.

13. Machine-outil selon l'une quelconque des revendications précédentes, **caractérisée en ce que** la partie de support (100) présente une surface d'appui (43) alignée en particulier avec une surface d'appui (15, 59) de la base de machine (20) pour l'appui d'une pièce (W) et/ou une surface d'appui alignée en particulier avec une surface d'appui (16) de la base de machine (20) pour l'appui d'une pièce (W) et/ou une surface de guidage pour le guidage le long d'une pièce (W).

14. Machine-outil selon l'une quelconque des revendications précédentes, **caractérisée en ce que** la base de machine (20) est configurée ou prévue pour la pose sur un support et/ou que la base de machine (20) forme une base de pivotement (18), au niveau de laquelle une partie de pivotement (17) est logée de manière pivotante autour d'un axe de pivotement (S) pour la modification d'une position relative du logement d'outil (13) pour l'outil, en particulier l'outil de coupe (14), et une surface d'appui (16) prévue pour l'appui d'une pièce (W), dans laquelle il est prévu de manière appropriée que la partie de pivotement (17) et/ou la base de pivotement (18) met à disposition une surface d'appui (15) et/ou surface d'appui (16) pour la pièce (W) et/ou une base porteuse pour le module d'entraînement (11).

15. Machine-outil selon l'une quelconque des revendications précédentes, **caractérisée en ce que** le module d'entraînement (11) est logé de manière linéaire par rapport à la base de machine (20) au niveau d'un guidage linéaire (30) pour la réalisation de coupes longitudinales avec l'outil de coupe (14) et/ou est logé de manière pivotante autour d'un axe de pivotement oblique (S3) par rapport à la base de machine (20) et/ou est logé de manière pivotante vers une surface d'appui de pièce (15) prévue pour l'appui d'une pièce (W) et s'en écartant à l'aide d'un palier pivotant capoté (35).
